# EUROPÄISCHE PATENTSCHRIFT

(11) **EP 0 845 410 B1**
(45) Veröffentlichungstag und Bekanntmachung des Hinweises auf die Patenterteilung: **15.01.2003**
(21) Anmeldenummer: 97118620.0
(22) Anmeldetag: 27.10.1997
(51) Int. Cl.: B64C 21/06

(54) **Nase für eine aerodynamische Fläche und Verfahren zu ihrer Herstellung**
Leading edge for an aerodynamic surface and fabrication method therefor
Bord d'attaque pour une surface aérodynamique et procédé pour sa fabrication

(30) Priorität: 27.11.1996 DE 19649132
(43) Veröffentlichungstag der Anmeldung: 03.06.1998
(73) Patentinhaber: Airbus Deutschland GmbH, 21129 Hamburg (DE)
(72) Erfinder: Kränzien, Peter, 22589 Hamburg (DE)
(74) Vertreter: Hansmann, Dierk, Dipl.-Ing.

(56) Entgegenhaltungen:
- EP-A- 0 665 097
- EP-A- 0 679 572
- DE-C- 4 436 748
- US-A- 5 316 032

## Beschreibung

Die Erfindung bezieht sich auf eine Nase nach dem Oberbegriff des Anspruchs 1 und ein Verfahren zu ihrer Herstellung nach dem Oberbegriff des Anspruchs 6, 7 bzw. 8.

Die Notwendigkeit, die Strömung im Nasenbereich einer aerodynamischen Fläche, beispielsweise eines Flügels oder eines Leitwerks durch Absaugung günstig zu beinflussen, macht es erforderlich, daß die Außenfläche der Nase durch ein luftdurchlässiges Element gebildet wird. Die EP-0 665 097 A2 zeigt ein Verfahren zur Herstellung einer derartigen Nase. Die nach diesem Verfahren hergestellte Nase besteht aus einer Stützstruktur aus faserverstärktem Kunststoff mit in Längsrichtung verlaufenden Kanälen von trapezförmigem Querschnitt, wobei die Außenfläche der Nase durch eine perforierte mit der Stützstruktur durch Kleben verbundene Außenhaut gebildet wird. Zur Herstellung dieser Nase dient ein Verfahren zum Formen einer Stützstruktur mit einer profilgebenden Fläche und einer rückwärtigen Fläche für ein perforiertes aerodynamisches profilgebendes Element, gekennzeichnet durch die Schritte Unterstützen des Elements in einer profilgebenden Konfiguration auf der Rückseite des perforierten Elementes, Formen eines Formwerkzeuges für die Stützstruktur, Formen eines Geleges aus faserverstärktem Material zusammen mit Kunststoff Matrixmaterial in dem Formwerkzeug und Aushärten der Stützstruktur durch Anwendung von Wärme und Druck. Hierbei besteht eine Ausgestaltung des Verfahrens darin, daß einzelne Formelemente in Gestalt von Volldornen von trapezförmigem Querschnitt und in gleicher Weise geformte Hohldorne aus einem dehnbaren Material (Silicongummi) so in das Formwerkzeug eingelegt werden, dass die aus Prepregmaterial zu bildende Stützstruktur eine Wellenform erhält. Dabei werden zunächst die Hohldome in das in dem Formwerkzeug liegende perforierte Material eingebracht, wobei schmale Bereiche des perforierten Materials zwischen den Hohldomen frei bleiben. Dann wird das Prepregmaterial auf die Hohldome und in den schmalen Bereichen auf das perforierte Element laminiert. Anschließend werden die Volldorne in die zwischen den Hohldornen bestehenden Lücken eingesetzt und die Innenschicht der Stützstruktur auf die Hohl- und Volldorne laminiert. Diese Schicht wird anhand eines entsprechenden Formteils angepreßt. Zugleich werden die Innenräume der Hohldorne mit einer Druckluftquelle verbunden. Hierdurch werden alle Prepregschichten unter Druck gesetzt. Nach dem Aushärten durch Wärmezufuhr bildet die wellenförmige Stülzstruktur abwechselnd mit dem perforierten Material und der Innenschicht langgestreckte in Umfangsrichtung geschlossene Hohlräume, in denen sich die Voll- und die Hohidorne befinden. Da diese Dome keine nennenswerte Eigensteifigkeit aufweisen, ergeben sich infolge ihrer Länge Schwierigkeiten sowohl beim Einregen als auch bei der Entnahme der Dome. Das Einformen der Stützstruktur auf der Rückseite des perforierten Elementes geschieht naturgemäß in einer Negativform. Daher besteht bei den hier auszuführenden Arbeiten nur eine beschränkte Zugänglichkeit.

Demgemäß liegt der Erfindung die Aufgabe zugrunde, eine gattungsgemäße Nase und ein Verfehren zu ihrer Herstellung derart auszubilden, daß langgestreckte in die Form einlegbare Dome von geringer Eigensteifigkeit und die Verwendung von Negativformen vermieden werden.

Diese Aufgabe wird bei den gattungsgemäßen Gegenständen durch die kennzeichnenden Merkmale der Patentansprüche 1 und 6 bis 8 gelöst.

Dabei ist insbesondere von Vorteil, daß das Einformen der Tragstruktur mit geringem Zeitaufwand erfolgen kann.

Vorteilhafte Weiterbildungen der Erfindung sind in den jeweiligen Unteransprüchen angegeben.

Die Erfindung ist anhand der Zeichnung dargestellt und nachfolgend näher erläutert. Es zeigen
Fig. 1 eine Übersicht über ein Seitenleitwerk mit einer Nase,
Fig. 2 den Querschnitt II-II der Nase nach Figur 1, mit einer Kunststoffstruktur und einer Metallstruktur,
Fig. 3 die Einzelheit III nach Figur 2,
Fig. 4 die Kunststoffstruktur nach Figur 3,
Fig. 5 die Metallstruktur nach Figur 3,
Fig. 6 eine Ausgestaltung mit U-Profilen und
Fig. 7 die Metallstruktur nach Figur 6.

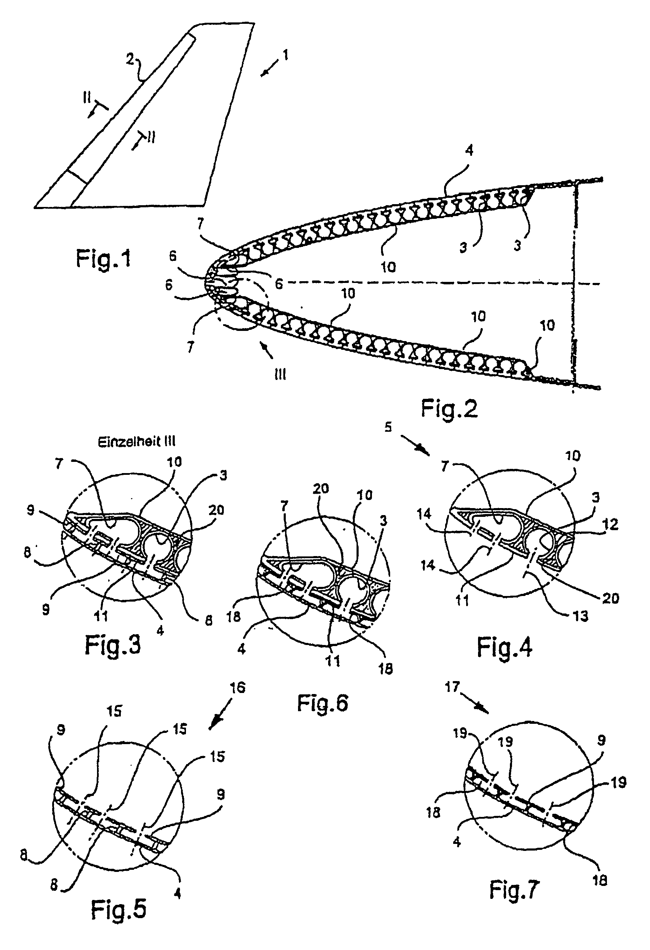

Figur 1 zeigt eine aerodynamische Fläche am Beispiel eines trapezförmigen Seitenleitwerks 1 mit einer Nase 2. Die Nase 2 stellt zum einen sicher, daß die anhand aerodynamischer Verfahren ermittelte Profilgeometrie im Vorderkantenbereich des Seitenleitwerks eingehalten wird, zum anderen nimmt die Nase 2 alle an ihr angreifenden Lasten auf und leitet sie in die Leitwerksstruktur ein. Um die im Flugbetrieb innerhalb der Grenzschicht ablaufenden Vorgänge günstig zu beeinflussen, weist die Nase eine Außenhaut mit einer Perforation auf, so daß die Grenzschicht beispielsweise durch Absaugung beeinflußt werden kann.

Figur 2 zeigt den Querschnitt II - II der Nase 2 nach Figur 1, mit einem vorwiegend aus Rohren 3 mit einem Kreisquerschnitt bestehenden Kanalsystem und einer perforierten aus einem geeigneten Metall, beispielsweise Titan, bestehenden Außenhaut 4. Im Vorderkantenbereich der Nase 2 ist anstelle der Rohre 3 eine Gruppe von Kanälen 6 mit vorwiegend rechteckigem Querschnitt angeordnet, die zu beiden Seiten jeweils durch einen Kanal 7 mit einem Übergangsquerschnitt begrenzt wird. Die Rohre 3 und Kanäle 6, 7 des Kanalsystems sind in eine Anordnung aus faserverstärktem Kunststoff eingebettet, mit der sie eine Kunststoffstruktur bilden. Dabei stehen jeweils die einzelnen Rohre 3 und Kanäle 6, 7 mit einem dem betreffenden Rohr bzw. Kanal zugeordneten streifenförmigen Bereich der Außenhaut 4 in Verbindung. Die innere Wandung der Kunststoffstruktur wird durch ein inneres Laminat 10 gebildet.

Figur 3 zeigt die Einzelheit III nach Figur 2. Diesem Teitbreich sind die für das gesamte Bauteil geltenden Gestaltungsmerkmale zu entnehmen. Hier ist einer der Kanäle 7 mit einem benachbarten Rohr 3 dargestellt. Die Außenhaut 4 ist über Abstandelemente in Form von leistenförmigen Stegen 8 mit einer Innenhaut 9 verbunden und bildet mit dieser eine formsteife Metatlstruktur, die durch Kleben auf der Kunststoffstruktur befestigt ist.

Die Figuren 4 und 5 zeigen die Kunststoffstruktur 5 bzw. die Metallstrucktur 16 bevor diese miteinander verbunden werden. So zeigt Figur 4 den Teilbereich nach Fig.3, wobei nur die Stützstruktur 5 dargestellt ist. Diese besteht im wesentlichen aus dem inneren Laminat 10, den Rohren 3 und den Kanälen 7 sowie einem äußeren Laminat 11. Die Laminate 10 bzw. 11 bestehen aus mehreren Lagen eines in ein ausgehärtetes Kunstharz eingebetteten Fasermaterials, vorzugsweise Kohtefasern.

Die Rohre 3 und die Kanäle 7 sowie die hier nicht sichtbaren Kanäle 6 bestehen aus dem gleichon Material. Die Hohlräume zwischen den Rohren 3 und den Kanälen 6,7 sind mit einem ausgehärteten Kunststoffschaum ausgefüllt. Die konische Form der Rohre 3 und Kanäle 6,7 ergibt sich aus der Trapezform des Seitenleitwerks nach Fig. 1. In vorbestimmten Abständen sind Bohrungen 13 und 14 an der Stützstruktur 5 angebracht, wodurch der Zugang zu den Rohren 3 und Kanälen 6, 7 hergestellt wird. Dabei sind die Bohrungen, die in die Rohre 3 einmünden, einreihig angeordnet und mit 13 bezeichnet. Die mit 14 bezeichneten in die Kanäle 7 einmündenden Bohrungen sind demgegenüber zweireihig ausgeführt. um beim Einschäumen den Durchtritt des Kunststoffschaums zu erleichtern. können die Rohre 3 und die Kanäle 7 durch kurze in Längsrichtung verteilte Abstandhalter 12 in einem vorbestimmten gegenseitigen Abstand gehalten werden.

Figur 5 zeigt nur die Metallstruktur der Nase 2. Dabei sind innerhalb der Innenhaut 9 Bohrungen 15 so angebracht, daß sie nach dem Zusammenbau mit der Stützstruktur 5 mit den darin befindlichen Bohrungen 13, 14 deckungsgleich übereinander liegen. Das Bild zeigt die Außenhaut 4 und die Innenhaut 9, die durch die Stege 8 miteinander verbunden sind. Diese Teile sind durch Hochtemperaturlöten in sogenannten Stumpflötungen, insbesondere an der Außenhaut 4, miteinander verbunden. Hierdurch wird sichergestellt, daß von der perforierten Außenhaut 4 nur im Bereich der jeweiligen Verbindung mit dem betreffenden Steg 8 ein schmaler Streifen der perforierten Fläche durch den betreffenden Steg 8 abgedeckt wird und daher für die Absaugung vertoren geht. Die Anwendung des Hochtemperaturlötens bietet außerdem den Vorteil, dass Deformationen der Außenkontur vermieden werden. wie sie bei Anwendung des Widerstandsschweißens zwangsläufig entstehen.

Fig. 6 zeigt eine Ausgestaltung der Nase, wobei U-Profile 18 als Abstandhaller innerhalb der Metallstruktur dienen. Hierbei ist die Ausbildung der Stützstruktur gegenüber der der Figuren 4 und 5 unverändert, Die U-Profile 18 sind durch Abkanten hergestellt, und zwar so, daß deren Jochbreite nach außen, das heißt zur Spitze des Leitwerks hin abnimmt.

Fig. 7 zeigt die Ausgestaltung nach Figur 6, jedoch ohne die Stützstruktur 5. Die hier gezeigte Metallstruktur besteht wieder aus der Außenhaut 4 und der Innenhaut 9, zwischen denen die besagten U-Profile 18 so angeordnet sind, daß das jeweilige Joch der Querschnittsform an der Innenhaut 9 anliegt und die Schenkel dieser Querschnittsform auf der Außenhaut 4 stehen. Dabei liegen die Schenkel benachbarter U-Profile 18 aneinander an und die Verbindungen der U-profile 18 untereinander sowie deren Verbindungen rnit der Innenhaut 9 und der Außenhaut 4 sind wieder durch Hochtemperaturlöten hergestellt. Auch bei dieser Lösung wird nur ein schmaler Streifen der perforierten Außenhaut jeweils durch die betreffenden Schenkel abgedeckt. Dabei sind wieder innerhalb der Innenhaut 9 Bohrungen 19 so angebracht, daß sie nach dem Zusammenbau mit der Stützstruktur 5 mit den dort bereits angebrachten Bohrungen 13, 14 deckungsgleich übereinander liegen.

Zur Herstellung der Stützstruktur 5 sind folgende Arbeitsschritte erforderlich:
- Ablegen des inneren Laminates 10 auf eine positive Klebevorrichtung,
- Ablegen der vorgefertigten Rohre 3 und Kanäle 6,7 mit den Abstandhaltern 12 auf das innere Laminat 10,
- Einspritzen eines Füllmaterials 20,
- Ablegen des äußeren Laminates 11 auf die Rohre 3 und Kanäle 6, 7,
- Aushärten des Kunststoffs im Autoklav,
- Bohren von Absauglöchem 14.

Die Herstellung der Metallstruktur 16 mit den leistenförmigen Stegen 8 erfolgt mittels einer geeigneten als Positivform ausgebildeten Vorrichtung und umfaßt im wesentlichen folgende Arbeitsschritte:

### Beispiel 1

- Formen der Innenhaut 9 gemäß der Kontur der Vorrichtung,
- Zuschneiden der leistenförmigen Stege 8 mit Übermaß.
- Verbinden der Stege 8 mit der Innenhaut 9 durch Hochtemperaturtöten oder Laserstrahlschweißen.
- Fräsen der Stege 8 auf Kontur,
- Formen der Außenhaut 4,
- Verbinden der Außenhaut 4 mit den Stegen 8 durch Hochtemperaturlöten,
- Bohren von Absaugtöchern 15.

Zur Herstellung der Metallstruktur 17 mit U-Profilen mittels einer Positivform sind folgende Arbeitsschritte erforderlich:

### Beispiel 2

- Formen der Innenhaut 9 gemäß der Kontur der Vorrichtung,
- Abkanten der U-Profile 18 mit nach außen abnehmender Jochbreite und Übermaß der Schenkel,
- Verbinden der U-Profile 18 mit der Innenhaut 9 durch Hochtemperaturtöten oder Laserstrahlschweißen,
- Fräsen der Schenkel der U-Profile 18 auf Kontur,
- Formen der Außenhaut 4.
- Verbinden der Außenhaut 4 mit den Schenkeln der U-Profile 18 durch Hochtemperaturlöten,
- Bohren von Absauglöchern 19.

Durch das in beiden Beispielen angewendete Fräsen der Stege 8 bzw. der Schenkel der U-Profile 18 auf Kontur wird sichergestellt, daß die aus aerodynamischen Gründen erforderliche Formgebung der Nase mit hoher Genauigkeit eingehalten wird.

Durch die Verwendung der vorgefertigten Kunststoffrohre 3 bzw. Kanäle 6. 7 wird erreicht. daß das Einformen der. Tragstruktur mit geringem Zeitaufwand erfolgt.

## Patentansprüche

1. Nase für eine aerodynamische Fläche, bestehend aus einer Stützstruktur (5) aus faserverstärktem Kunststoff mit in Längsrichtung verlaufenden Kanälen (6, 7), wobei die Außenhaut (4) der Nase (2) durch ein perforiertes mit der Stützstruktur (5) verbundenes Hautelement gebildet wird, **dadurch gekennzeichnet, daß** die Stützstruktur (5) aus einem inneren Laminat (10), mehreren in Längsrichtung verlaufenden Rohren (3) und den Kanälen (6, 7) und einem äußeren Laminat (11) besteht, wobei die Hohlräume zwischen den Rohren (3) und den Kanälen (7) und zwischen dem ihnen aufliegenden inneren Laminat (10), das die innere Wandung der Stützstruktur (5) verkörpert, und dem ihnen aufliegenden äußeren Laminat (11) mit einem Füllmaterial (20) ausgefüllt sind, und die Verbindung der perforierten Außenhaut (4) mit der Stützstruktur (5) über Abstandelemente und eine Innenhaut (9) erfolgt, die mit der Außenhaut (4) eine formsteife Metallstruktur bilden, wobei die Außenhaut (4) und die Innenhaut (9), die durch Kleben auf der Stützstruktur (5) befestigt ist, durch die Abstandelemente miteinander verbunden sind.

2. Nase nach Anspruch 1, **dadurch gekennzeichnet, daß** die Rohre (3) und die Kanäle (6, 7) durch Abstandhalter (12) in einem vorbestimmten gegenseitigen Abstand gehalten werden.

3. Nase nach Anspruch 1 oder 2, **dadurch gekennzeichnet, daß** die Abstandelemente zwischen der Außenhaut (4) und der Innenhaut (9) durch leistenförmige Stege 8) gebildet werden.

4. Nase nach Anspruch 1, **dadurch gekennzeichnet, daß** die Abstandelemente zwischen der Außenhaut (4) und der Innenhaut (9) durch die Schenkel von U-Profilen (18) gebildet werden.

5. Nase nach Anspruch 1, **dadurch gekennzeichnet, dass** in vorbestimmten Abständen an der Innenhaut (9) und an der Stülzstruktur (5) Absauglöcher angebracht sind, die deckungsgleich übereinander liegend angeordnet sind und in die Rohre (3) und Kanäle (6, 7) geführt sind.

6. Verfahren zur Herstellung einer Nase nach Anspruch 1, bestehend aus einer Stützstruktur aus faserverstärktem Kunststoff und einer formsleifen Metallstruktur, **gekennzeichnet durch** folgende Verfährensschritte zur Herstellung der Stützstruktur
a) Ablegen des inneren Laminates (10) auf eine positive Klebevorrichtung,
b) Ablegen der vorgefertigten Rohre (3) und Kanäle (6,7) mit den Abstandhaltern (12) auf das innere Laminat (10),
c) Einspritzen des Füllmaterials (20),
d) Ablegen des äußeren Laminates (11) auf die Rohre (3) und Kanäle (6,7),
e) Aushärten des Kunststoffs im Autoklav,
f) Bohren der Absauglöcher (13, 14).

7. Verfahren zur Herstellung einer Nase nach Anspruch 3, bestehend aus einer Stützstruktur aus faserverstärktem Kunststoff und einer formsteifen Metallstruktur, **gekennzeichnet durch** folgende Verfahrensschritte zur Herstellung der Metallstruktur
a) Formen der Innenhaut (9) gemäß der Kontur einer als Positivform ausgebildeten Vorrichtung,
b) Zuschneiden der leistenförmigen Stege (8) mit Übermaß,
c) Verbinden der Stege (8) mit der Innenhaut (9) **durch** Hochtemperaturlöten oder Laserstrahlschwelßen,
d) Fräsen der Stege (8) auf Kontur,
e) Formen der Außenhaut (4),
f) Verbinden der Außenhaut (4) mit den Stegen (8) **durch** Hochtemperaturlöten,
g) Bohren der Absauglöchem (15).

8. Verfahren zur Herstellung einer Nase nach Anspruch 4, bestehend aus einer Stützstruktur aus faserverstärktem Kunststoff und einer formsteifen Metallstruktur, **gekennzeichnet durch** folgende Verfahrensschritte zur Herstellung der Metallstruktur
a) Formen der Innenhaut (9) gemäß der Kontur einer als Positivform ausgebildeten Vorrichtung,
b) Abkanten der U-Profile (18) mit nach außen abnehmender Jochbreite und Übermaß der Schenkel,
c) Verbinden der U-Profile (18) mit der Innenhaut (9) **durch** Hochtemperaturlöten oder Laserstrahlschweißen,
d) Fräsen der Schenkel der U-Profile (18) auf Kontur,
e) Formen der Außenhaut (4),
f) Verbinden der Außenhaut (4) mit den Schenkeln der U-Profile (18) **durch** Hochtemperaturlöten,
g) Bohren der Absauglöchern (19).

## Claims

1. Nose for an aerodynamic surface, the said nose consisting of a supporting structure (5) of fibre-reinforced plastic with ducts (6, 7) extending in the longitudinal direction, wherein the outer skin (4) of the nose (2) is formed by a perforated skin element connected to the said supporting structure (5), **characterised in that** the supporting structure (5) consists of an inner laminate (10), a plurality of tubes (3) extending in the longitudinal direction and the ducts (6, 7) and an outer laminate (11), wherein the cavities between the tubes (3) and the ducts (7) and between the inner laminate (10), which rests on them and which embodies the inner wall of the supporting structure (5), and the outer laminate (11) which rests on them, are filled with a filling material (20), and the connection of the perforated outer skin (4) to the supporting structure (5) takes place via distance elements and an inner skin (9) which form, with the outer skin (4), a dimensionally stable metal structure, wherein the outer skin (4) and the inner skin (9), which is fastened on the supporting structure (5) by bonding, are connected to one another by the distance elements.

2. Nose according to claim 1, **characterised in that** the tubes (3) and the ducts (6, 7) are kept at a predetermined distance from one another by spacers (12).

3. Nose according to claim 1 or 2, **characterised in that** the distance elements between the outer skin (4) and the inner skin (9) are formed by strip-shaped webs (8).

4. Nose according to claim 1, **characterised in that** the distance elements between the outer skin (4) and the inner skin (9) are formed by the legs of U sections (18).

5. Nose according to claim 1, **characterised in that** extraction holes, which are disposed so as to lie congruently one above another and are directed into the tubes (3) and ducts (6, 7), are located at predetermined intervals on the inner skin (9) and on the supporting structure (5).

6. Process for manufacturing a nose according to claim 1 consisting of a supporting structure of fibre-reinforced plastic and a dimensionally stable metal structure, **characterised by** the following process steps for manufacturing the said supporting structure:
a) depositing of the inner laminate (10) on a positive bonding device;
b) depositing of the prefabricated tubes (3) and ducts (6, 7) with the spacers (12) on the inner laminate (10) ;
c) injecting of the filling material (20);
d) depositing of the outer laminate (11) on the tubes (3) and ducts (6, 7);
e) curing of the plastic in an autoclave;
f) drilling of the extraction holes (13, 14).

7. Method of manufacturing a nose according to claim 3 consisting of a supporting structure of fibre-reinforced plastic and a dimensionally stable metal structure, **characterised by** the following process steps for manufacturing the said metal structure:
a) moulding of the inner skin (9) in accordance with the contour of a device constructed as a positive mould;
b) cutting-out of the strip-shaped webs (8) with an oversize;
c) connecting of the webs (8) to the inner skin (9) by high-temperature soldering or laser beam welding;
d) milling of the webs (8) to contour;
e) moulding of the outer skin (4) ;
f) connecting of the outer skin (4) to the webs (8) by high-temperature soldering;
g) drilling of the extraction holes (15).

8. Method of manufacturing a nose according to claim 4 consisting of a supporting structure of fibre-reinforced plastic and a dimensionally stable metal structure, **characterised by** the following process steps for manufacturing the said metal structure:
a) moulding of the inner skin (9) in accordance with the contour of a device constructed as a positive mould;
b) bending of the U sections (18) with a yoke breadth that decreases towards the outside and an oversize on the legs;
c) connecting of the U sections (18) to the inner skin (9) by high-temperature soldering or laser beam welding;
d) milling of the legs of the U sections (18) to contour;
e) moulding of the outer skin (4);
f) connecting of the outer skin (4) to the legs of the U sections (18) by high-temperature soldering;
g) drilling of the extraction holes (19).

## Revendications

1. Bord d'attaque pour une surface aérodynamique, constitué d'une structure portante en matière plastique renforcée par des fibres et dotée de canaux (6, 7) s'étendant dans le sens longitudinal, la membrane externe (4) du bord d'attaque (2) étant formée par une pellicule perforée reliée à la structure portante (5), et **caractérisé en ce que** la structure portante (5) se compose d'un aggloméré laminé interne (10), de plusieurs tuyaux (3) s'étendant dans le sens longitudinal, des canaux (6, 7) et d'un aggloméré laminé externe (11), les espaces creux situés entre les tuyaux (3) et les canaux (7), d'une part, et entre l'aggloméré laminé interne reposant sur les canaux et représentant la paroi interne de la structure portante (5) et l'aggloméré laminé externe (11), d'autre part, étant remplis d'un matériau de remplissage (20), le raccordement entre la membrane externe perforée (4) et la structure portante (5) étant assuré par l'intermédiaire d'écarteurs et d'une membrane interne (9) qui forment avec la membrane externe (4) une structure métallique indéformable et la membrane externe (4) étant reliée via des écarteurs à la membrane interne (9) fixée par collage sur la structure portante (5), et inversement.

2. Bord d'attaque selon la revendication 1, **caractérisé en ce que** les tuyaux (3) et les canaux (6, 7) sont maintenus à une distance prédéterminée les uns des autres par l'intermédiaire d'écarteurs (12).

3. Bord d'attaque selon la revendication 1 ou 2, **caractérisé en ce que** les écarteurs entre la membrane externe (4) et la membrane interne (9) sont constitués par des entretoises en forme de listeaux 8.

4. Bord d'attaque selon la revendication 1, **caractérisé en ce que** les écarteurs entre les membranes externe (4) et interne (9) sont formés par les montants de profilés en forme de U (18).

5. Bord d'attaque selon la revendication 1, **caractérisé en ce que** des orifices d'aspiration coïncidents situés les uns aux dessus des autres et guidés dans les tuyaux (3) et canaux (6, 7) sont disposés à des distances prédéfinies sur la membrane interne (9) et la structure portante (5).

6. Procédé pour la fabrication d'un bord d'attaque conforme à la revendication 1 et constitué d'une structure portante en matière plastique renforcée par fibres et d'une structure métallique indéformable, le procédé étant **caractérisé par** les étapes suivantes de production de la structure portante
a) Pose de l'aggloméré laminé interne (10) sur un dispositif de collage positif,
b) Pose des tuyaux préfabriqués (3) et des canaux (6,7) avec écarteurs (12) sur l'aggloméré laminé interne (10),
c) Injection du matériau de remplissage (20),
d) Pose de l'aggloméré laminé externe (11) sur les tuyaux (3) et les canaux (6,7),
e) Durcissement de la matière plastique en autoclave,
f) Alésage des orifices d'aspiration (13, 14).

7. Procédé pour la fabrication d'un bord d'attaque conforme à la revendication 3 et composé d'une structure portante en matière plastique renforcée par fibres et d'une structure métallique indéformable, le procédé étant **caractérisé par** les étapes suivantes de production de la structure métallique
a) Formation de la membrane interne (9) conformément aux contours d'un dispositif se présentant sous une forme positive,
b) Découpage des entretoises (8) en forme de listeaux avec surmesure,
c) Raccordement des entretoises (8) avec la membrane interne (9) par brasage à haute température ou soudage par rayons laser,
d) Fraisage des entretoises sur le contour,
e) Formation de la membrane externe (4),
f) Raccordement de la membrane externe (4) avec entretoises (8) par brasage à haute température,
g) Alésage des orifices d'aspiration (15).

8. Procédé pour la fabrication d'un bord d'attaque conforme à la revendication 4 et constitué d'une structure portante en matière plastique renforcée par fibres et d'une structure métallique indéformable, le procédé étant **caractérisé par** les étapes suivantes de production de la structure métallique
a) Formation de la membrane interne (9) conformément aux contours d'un dispositif se présentant sous une forme positive,
b) Equarrissage des profilés en forme de U (18) avec largeur de voie diminuant vers l'extérieur et surmesure des montants,
c) Raccordement des profilés en forme de U (18) avec la membrane interne (9) par brasage à haute température ou soudage par rayons laser,
d) Fraisage des montants des profilés en forme de U (18) sur les contours,
e) Formation de la membrane externe (4),
f) Raccordement de la membrane externe (4) avec les montants des profilés en forme de U (18) par brasage à haute température,
g) Alésage des orifices d'aspiration (19).
